(19) Europäisches Patentamt
European Patent Office
Office européen des brevets

(11) EP 2 431 969 B1

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
***G10L 15/14*** *(2006.01)*      *G10L 15/28* *(2013.01)*

(21) Anmeldenummer: **10176852.1**

(22) Anmeldetag: **15.09.2010**

(54) **Spracherkennung mit kleinem Rechenaufwand und reduziertem Quantisierungsfehler**

Speech recognition with small CPU footprint and reduced quantization error

Reconnaissance vocale ayant un petit coût de calcul et une erreur de quantification réduite

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.03.2012 Patentblatt 2012/12**

(73) Patentinhaber: **Svox AG**
**8048 Zürich (CH)**

(72) Erfinder:
• **Hofer, Joachim**
**81739 München (DE)**

• **Stemmer, Georg, Dr.**
**81825 München (DE)**

(74) Vertreter: **Stocker, Kurt**
**Büchel, von Révy & Partner**
**Zedernpark**
**Bronschhoferstrasse 31**
**9500 Wil (CH)**

(56) Entgegenhaltungen:
**EP-A2- 1 457 967**

EP 2 431 969 B1

**Beschreibung**

Die vorliegende Erfindung betrifft ein Verfahren zur Spracherkennung für Geräte mit begrenzter Rechen- und Speicherkapazität. Die Erfindung betrifft ferner eine Spracherkennungsvorrichtung, welche zur Durchführung eines entsprechenden Verfahrens geeignet ist, sowie ein Computerprogrammprodukt, welches die Durchführung eines Spracherkennungsverfahrens auf einer programmgesteuerten Spracherkennungsvorrichtung veranlasst.

Verfahren zur Spracherkennung als Ergänzung für Mensch-Maschine-Schnittstellen finden immer breitere Anwendungsfelder. Die Befehlserkennung oder Auswahl von Einträgen aus Adressbüchern bei mobilen Endgeräten, wie beispielsweise Mobiltelefonen, ist mittlerweile ein Standardfunktionsumfang. Insbesondere auch bei Kraftfahrzeugen werden Spracherkennungssysteme eingesetzt, um z. B. Start- und Zielvorgaben für Navigationseinrichtungen zu erfassen.

Gebräuchliche Spracherkennungsverfahren basieren zum Beispiel auf sogenannten Hidden-Markov-Modellen, die eine sprecherunabhängige Spracherkennung ermöglichen und einen hohen Rechenaufwand bedingen. Da insbesondere bei Kraftfahrzeugen häufig sogenannte eingebettete Systeme bzw. Embedded Systems als Rechner zum Einsatz gelangen, welche nur begrenzte Rechenkapazität und Speicherressourcen aufweisen, müssen häufig sowohl Algorithmen zur Beschleunigung der Berechnung als auch Verfahren zur Reduktion des Speicherbedarfs eingesetzt werden.

Der für das Spracherkennungverfahren benötigte Speicherbedarf und die Rechenkapazität können durch eine Quantisierung der Ausgabedichten der Hidden-Markov-Modelle, im Folgenden als Gaussian Streaming bezeichnet, reduziert werden. Ein weit verbreitetes Verfahren zur Quantisierung der Ausgabedichten der Hidden-Markov-Modelle ist in Bocchieri, E. und Mak, B. K-W. "Subspace Distribution Clustering Hidden Markov Model", IEEE Trans. Speech and Audio Processing, Vol. 9, No. 3, 2001, Seiten 264-275 beschrieben. Bei den Ausgabedichten von Hidden-Markov-Modellen handelt es sich meist um Mischungen von D-dimensionalen Gaußdichten. Ein typischer Wert für D ist etwa 24 oder 39. Beim Gaussian Streaming wird der D-dimensionale Mittelwertvektor jeder Gaußdichte durch Einträge eines oder mehrerer Codebücher ersetzt. Der D-dimensionale Raum der Mittelwertvektoren wird dazu in k Unterräume der Dimension $d=(D/k)$ unterteilt. Die Unterräume werden auch als Streams bezeichnet. Für $k=12$ und $D=24$ ergeben sich zwölf zweidimensionale Streams. Die Codebucheinträge haben die gleiche Dimension wie die Streams, d.h. ein 24-dimensionaler Mittelwertvektor wird beispielsweise aus zwölf zweidimensionalen Codebucheinträgen zusammengesetzt. Dabei werden die Codebucheinträge so ausgewählt, dass sie möglichst ähnlich zu dem ursprünglichen Mittelwertvektor sind. Das Ersetzen der Mittelwertvektoren durch Codebucheinträge wird als Quantisieren der Ausgabedichten bezeichnet. Bei einer geeigneten Wahl der Codebuchgröße bewirkt das Verfahren eine starke Reduktion des Speicherbedarfs, da die ursprünglichen Mittelwertvektoren nicht gespeichert werden müssen.

Wie in Astrov, S. "Memory Space Reduction for Hidden Markov Models in Low-Resource Speech Recognition Systems", Proceedings of the International Conference on Spoken Language Processing (ICSLP) 2002, Seiten 1585-1588, 2002 beschrieben wird, ermöglicht das Streaming-Verfahren zusätzlich zur Speicherreduktion eine Beschleunigung der Berechnung der Ausgabewahrscheinlichkeiten der Hidden Markov Modelle. Die Beschleunigung wird dadurch erreicht, dass die Berechnung statt für jeden Mittelwertvektor nur noch für die Codebucheinträge erfolgt. Je weniger Streams und je weniger Codebucheinträge vorhanden sind, desto schneller wird die Berechnung.

Nach dem Quantisieren der Ausgabedichten unterscheiden sich die quantisierten Mittelwertvektoren von den ursprünglichen Mittelwertvektoren. Diese Abweichung wird als Quantisierungsfehler bezeichnet. Der Quantisierungsfehler sollte immer so klein wie möglich sein; ist er zu groß, vermindert das die Genauigkeit der Spracherkennung und damit die Qualität der Ergebnisse. Je mehr Einträge im Codebuch gespeichert werden, desto kleiner wird der mittlere Quantisierungsfehler. Die wesentlichen Nachteile dieses Vorgehens sind, dass mit der Anzahl der Einträge auch der Speicherbedarf steigt und die Berechnung der Ausgabedichten der Hidden-Markov-Modelle verlangsamt wird.

US 7 295 978 B1 beschreibt für die Spracherkennung die Verwendung einer Tabelle mit Distanzwerten für eindimensionale Gauß Verteilungen. Das Verfahren hat den Nachteil, dass hohe Quantisierungsfehler auftreten.

EP 1 457 967 A2 offenbart, daß Gaußdichten in Clustern für jede Dimension zusammengefasst werden. Jeder Cluster wird durch einen Zentroid mit Mittelwert und Varianz repräsentiert.

Aufgabe der vorliegenden Erfindung ist es, ein verbessertes Verfahren zur Spracherkennung bereitzustellen, ohne den benötigten Rechen- oder Speicheraufwand wesentlich zu erhöhen. Insbesondere soll der Quantisierungsfehler beim Gaussian Streaming für eine feste Codebuchgröße minimiert werden.

Diese Aufgabe wird durch ein Verfahren nach Anspruch 1 bzw. durch eine Spracherkennungsvorrichtung nach Anspruch 12, sowie durch ein Computerprogrammprodukt nach Anspruch 13 gelöst.

Im Rahmen der Erfindung wurde erkannt, dass der Quantisierungsfehler beim Gaussian Streaming um so kleiner ist, je kleiner die Länge des quantisierten Vektors ist. Um die Länge zu verringern, werden anstelle der Mittelwertvektoren sogenannte Differenzvektoren quantisiert. Dazu wird die Menge aller Mittelwertvektoren in Teilmengen benachbarter Mittelwertvektoren, sogenannte Cluster, partitioniert. Jedes Cluster wird durch einen Zentroidvektor repräsentiert, der im Mittelpunkt des Clusters liegt. Der Differenzvektor für jeden Mittelwertvektor ergibt sich als Differenz zwischen Mittelwertvektor und dem Zentroidvektor des Clusters, zu dem der Mittelwertvektor gehört. Die Differenzvektoren weisen durchschnittlich eine geringere Länge auf als die Mittelwertvektoren. Daher ist der mittlere Quantisierungsfehler kleiner als bei konventionellem Gaussian Streaming, wenn statt der Mittelwertvektoren die Differenzvektoren quantisiert werden. Die Reduktion des mittleren Quantisierungsfehlers kann bei nahezu gleichbleibender Rechenzeit erzielt werden und bewirkt eine Erhöhung der Genauigkeit der Spracherkennung und damit eine bessere Benützbarkeit des Gesamtsystems.

Bei einem erfindungsgemäßen Verfahren zur Spracherkennung einer Äußerung unter Verwendung eines Erkennungsvokabulars werden die folgenden Verfahrensschritte durchgeführt:

die Äußerung wird in Merkmalvektoren o_t umgewandelt,
die Wörter des Erkennungsvokabulars werden mit Zuständen s_i eines Hidden-Markov-Modells dargestellt, und
mit einer Emissionsberechnung wird zumindest einem Teil der Merkmalvektoren o_t und zumindest einem Teil der Zustände s_i des Hidden-Markov-Modells eine Wahrscheinlichkeit p(o_t|s_i) zugeordnet, welche der Ausgabedichte des jeweiligen Zustands s_i für den jeweiligen Merkmalvektor o_t entspricht,
die den Wörtern des Erkennungsvokabulars zugeordneten Zustände s_i sind als Mischungsverteilungen aus Gaußdichten mit D-dimensionalen Mittelwertvektoren ausgebildet,
die Mittelwertvektoren werden in Clustergruppen eingeteilt,
zu jeder Clustergruppe wird ein Clusterzentroid bestimmt,
Differenzvektoren mit D Komponenten werden zwischen Clusterzentroiden und Mittelwertvektoren berechnet, die D Komponenten jedes Differenzvektors werden in k Unterräume der Dimension d=(D/k) unterteilt, und jeder Differenzvektor a_j durch Codebucheinträge c(j) mindestens eines Codebuches dargestellt wird, welche Codebucheinträge c(j) die gleiche Dimension wie die Unterräume haben und so ausgewählt sind, dass die Komponenten der Codebucheinträge, die den jeweiligen Differenzvektor a_j darstellen, die Komponenten dieses Differenzvektors a_j annähern, und
bei der Emissionsberechnung
Terme mit Komponenten der Codebucheinträge zu den Differenzvektoren a_j welche den Mittelvektoren m_j der Mischungsverteilungen der jeweiligen Zustände s_i zugeordnet sind, und
Terme mit Komponenten des jeweiligen Merkmalvektors o_t
verwendet werden.

Die für die Emissionsberechnung vorgesehene Verwendung der Codebucheinträge, welche den jeweiligen Differenzvektor darstellen, bewirkt eine Reduktion des mittleren Quantisierungsfehlers bei kleiner Rechenzeit.

Für bevorzugte Ausführungsvarianten werden im Folgenden Algorithmen vorgeschlagen, um das Verfahren auf der Basis von Differenzvektoren zu realisieren ohne die Rechenzeit und/oder den Speicherbedarf für den Spracherkennungsvorgang zu erhöhen. Es werden spezielle Verfahren sowohl für die Resourcengenerierung, insbesondere die Erstellung von gestreamten Ausgabedichten, als auch für den eigentlichen Spracherkennungsvorgang beschrieben.

Bei einer bevorzugten Ausführungsform wird die Emissionsberechnung noch effizienter, weil vorberechnete Terme mit Komponenten der Codebucheinträge zum Differenzvektor und mit Komponenten der Mittelwertvektoren verwendet werden. Diese vorberechneten Terme müssen nur einmal berechnet werden.

Eine weitere bevorzugte Möglichkeit zur Erhöhung der Effizienz besteht darin, dass bei der Emissionsberechnung clusterbezogene Terme mit Komponenten von Clusterzentroiden und mit Komponenten von Merkmalvektoren o_t verwendet werden, wobei diese Terme mit Komponenten von Clusterzentroiden und mit Komponenten von Merkmalvektoren o_t pro Clustergruppe und Merkmalvektor o_t nur einmal berechnet werden.

Bei einer weiteren bevorzugten Ausführungsform wird ein Selektionsschritt durchgeführt, bei dem die Emissionsberechnung für einen Teil der Gaussdichten mit D-dimensionalen Mittelwertvektoren m_j aufgrund einer erwarteten kleinen Ausgabedichte des jeweiligen Mittelwertvektors m_j für den jeweiligen Merkmalvektor o_t weggelassen wird. Gaussian Selection Verfahren basieren auf der Tatsache, dass die logarithmierten Emissionswahrscheinlichkeiten log p(o_t | j) vieler Gaußdichten N_j so klein sind, dass sie bei der Berechnung ignoriert werden können, ohne dass die Erkennungsgenauigkeit des Spracherkennungssystems wesentlich verringert wird.

Wenn beim Selektionsschritt die erwarteten Ausgabedichten der Mittelwertvektoren m_j für den jeweiligen Merkmalvektor o_t ausgehend von den bei der Emissionsberechnung pro Clustergruppe und Merkmalvektor o_t nur einmal berechneten clusterbezogenen Termen mit Komponenten von Clusterzentroiden z_n und mit Komponenten von Merkmalvektoren o_t abgeschätzt werden, kann eine weitere Beschleunigung der Berechnung ohne zusätzlichen Rechenaufwand erreicht werden, da die bereits bestimmten Clusterzentroiden auch für den Selektionsschritt genutzt werden können.

Bei einer bevorzugten Lösung werden die zum Abschätzen von erwarteten Ausgabedichten berechneten clusterbezogenen Terme für alle Mittelwertvektoren m_j der Clustergruppe mit dem jeweiligen Clusterzentroid z_n verwendet. Insbesondere wird die Emissionsberechnung für die Mittelwertvektoren m_j weggelassen, wenn sie in Clustergruppen liegen, deren Clusterzentriode z_n zum Merkmalvektor o_t einen Abstand aufweisen, der über einem vorgegebenen Abstandswert liegt.

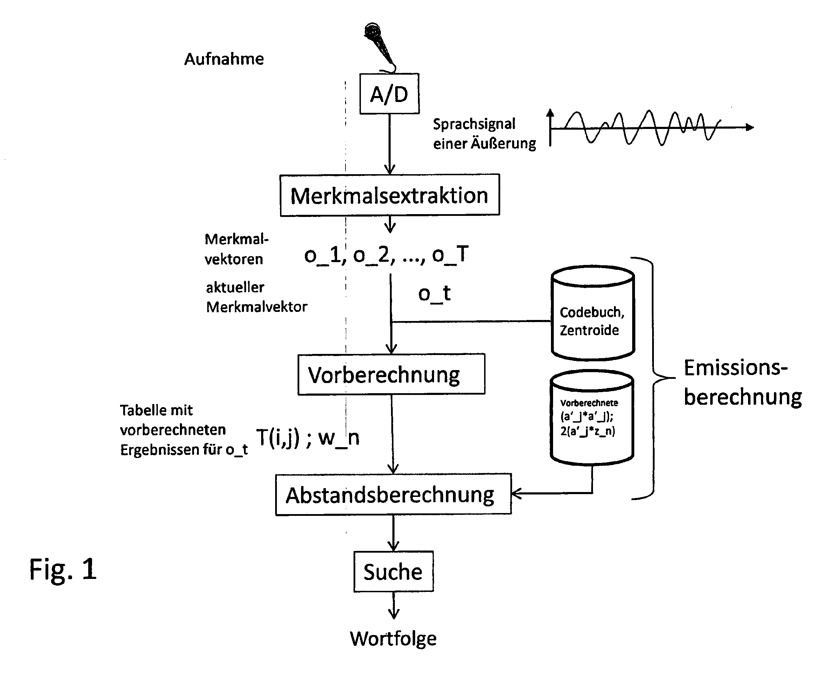

Fig. 1 ist eine schematische Ablauf-Darstellung der wesentlichen Schritte bei einer spezifischen Ausführung der Spracherkennung einer Äußerung unter Verwendung eines Erkennungsvokabulars. Die nachfolgende Beschreibung ist nicht auf die Ausführung gemäss Fig. 1 beschränkt.

Beim Spracherkennungsvorgang kann zuerst das Sprachsignal einer Äußerung beispielsweise durch ein Mikrofon (Mikrofon-Symbol) und einen nachgeschalteten Analog- /Digitalwandler (A/D) aufgenommen werden, welcher die digitale Äußerung weiteren Recheneinheiten, beispielsweise einer CPU in einem Embedded System, bereitstellt. Übliche Spracherkennungsverfahren weisen hintereinandergeschaltete Schritte wie Feature- oder Merkmalsberechnung (Merkmalsextraktion), Emissionsberechnung und Suche auf. Bei der Merkmalsberechnung wird das erfasste Audiosignal in Merkmale bzw. Merkmalsvektoren o_1, o_2, o_3, ... o_T umgewandelt, beispielsweise MFCC-Merkmale. Der jeweils aktuelle Merkmalsvektor wird mit o_t bezeichnet. Diese in der Regel standardisierten Merkmale bzw. Merkmalvektoren können für die eigentliche Spracherkennung aus dem Audiosignal extrahiert werden. MFCCs können z. B. berechnet werden, indem das erfasste Audiosignal bzw. die erfasste Äußerung zunächst in Blöcke oder Fenster von circa 15-20 Millisekunden Dauer unterteilt wird. An jedem Fenster wird dann eine Fourier-Transformation durchgeführt und ein Betragspektrum erzeugt.

Das Betragspektrum wird vorzugsweise gemäß der Mel-Skala verzerrt und logarithmisiert, um die menschliche Gehörwahrnehmung nachzubilden. Die in der Regel hohe Anzahl von entstehenden Frequenzbändern wird auf wenige, z. B. 40, zusammengefasst. Anschließend wird eine diskrete Kosinustransformation durchgeführt. Die Äußerung O besteht nach der Merkmalberechnung aus einer Folge von D-dimensionalen Merkmalvektoren o_1, o_2, o_3, ... o_T. Häufig ist D=24 oder 39. Die Anzahl T der Merkmalvektoren ist variabel und hängt von der Länge der Äußerung ab.

Die Wörter des aktiven Spracherkennungsvokabulars werden meist durch Hidden-Markov-Modelle repräsentiert. Hidden-Markov-Modelle sind stochastische Automaten, die aus Zuständen s_i bestehen, denen Ausgabedichten zugeordnet sind. Die Ausgabedichten sind häufig Mischungen von Gaußdichten. Bei der Emissionsberechnung wird für jeden Merkmalvektor o_t und alle zum Zeitpunkt t aktiven Zustände die Wahrscheinlichkeit $p(o_t \mid s_i)$, dass die Ausgabedichte eines Zustands s_i den Merkmalvektor o_t erzeugt, berechnet.

Es werden für Cluster von Mittelwertvektoren Zentroide bestimmt, die in der speziellen Ausführungsform gemäß Fig. 1 mit Codebucheinträgen dargestellt werden. Die gleichen Terme für die Emissionsberechnung sollten wenn immer möglich nicht mehrmals, sondern nur einmal berechnet werden. In einem bevorzugten Verfahrensschritt, der mit Vorberechnung bezeichnet ist, werden beispielsweise vorberechnete Terme mit Komponenten der Codebucheinträge zum Differenzvektor und mit Komponenten der Mittelwertvektoren, nämlich die Summanden $(a'_j * a'_j)$ und $2(a'_j * z_n)$, jeweils nur einmal berechnet und gespeichert. Dabei sind die Komponenten eines Zentroids mit z_n und Codebuchkomponenten der Differenzvektor mit a'_j bezeichnet. Beim Verfahrensschritt Vorberechnung werden gemäß einer bevorzugten Ausführung für die Emissionsberechnung clusterbezogene Terme mit Komponenten von Clusterzentroiden z_n und mit Komponenten von Merkmalvektoren o_t pro Clustergruppe und Merkmalvektor o_t nur einmal berechnet und gespeichert. Der als w_n bezeichnete Term $(z_n - o_t)*(z_n - o_t)$ ist der Abstand des Zentroiden z_n zum beobachteten Merkmalsvektor o_t. Der letzte zu berechnende Term $2(a_j * o_t)$ betrifft das D-dimensionale Skalarprodukt von Differenzvektor a_j und Merkmalvektor o_t. Dieser Term wird unter Verwendung der Codebucheinträge zum Differenzvektor berechnet und in einer Tabelle T(i,j) gespeichert. Für die Abstandsberechnung werden nun alle bereits berechneten Terme verwendet. Im Verfahrensschritt der Suche wird anhand der für das Erkennungsvokabular und die Merkmalvektoren o_t durchgeführten Emissionsberechnungen eine Wortfolge der Äusserung zugeordnet.

Da es sich bei den Ausgabedichten meist um Mischungen von Gaussdichten handelt, werden dabei für alle oder eine Teilmenge der Gaußdichten N_j der Mischungsverteilung des Zustands s_i die logarithmierte Wahrscheinlichkeit $\log p(o_t|j) = \log N_j(o_t \mid m_j, v_j)$ berechnet. Dabei steht m_j für den D-dimensionalen Mittelwertvektor der Gaußdichte j und v_j für die DxD-dimensionale Kovarianzmatrix der Gaußdichte j.

Bis auf einen additiven Term gilt $\log p(o_t|j) = \log N_j(o_t \mid m_j, v_j) = -1/2 ((o_t-m_j) * (o_t - m_j)) v^{(-1)}$ wobei $(*)v^{(-1)}$ das Skalarprodukt bezüglich $v^{(-1)}$ darstellt. Die logarithmische Wahrscheinlichkeit beschreibt also bis auf einen additiven Term den durch v normierten Abstand vom beobachteten Vektor o_t zum Mittelwertsvektor m_j. Im folgenden werden die Verfahren vereinfachend für Implementierungen erklärt, bei denen sich alle Gaußdichten N_j aller Hidden-Markov-Modelle eine globale Varianz teilen; die Algorithmen können aber leicht für Implementierungen mit Varianzen für jede Gaußdichte verallgemeinert werden. Wird eine globale Varianz verwendet, dann kann die Berechnung der logarithmierten Emissionswahrscheinlichkeit $\log p(o_t|j)$ einer Gaußdichte N_j bis auf einen konstanten additiven Term auf eine quadratische euklidische Abstandsberechnung zwischen dem Merkmalvektor o_t und dem Mittelwertvektor m_j reduziert werden: $(m_j - o_t) * (m_j - o_t)$, wobei (*) das Standardskalarprodukt ist.

Im Rahmen der Suche werden, ausgehend von den Ergebnissen der Emissionsberechnung, für Hypothesen L und die Äußerung O Produktionswahrscheinlichkeiten $p(O|L)$ berechnet. Eine Hypothese L besteht dabei aus einer Folge von mindestens einem Wort. Am Ende wird die Hypothese mit der höchsten Produktionswahrscheinlichkeit ausgegeben.

Die Resourcengenerierung umfasst das Erstellen von gestreamten Ausgabedichten durch Berechnung und Quantisierung der Differenzvektoren. Das Streaming basiert auf der Idee, den Raum der D-dimensionalen Zufallsvariablen in k d-dimensionale Unterräume zu zerlegen. Dabei gilt $k \times d = D$. Die Differenzvektoren sind dann nicht mehr D-dimensionale Vektoren, sondern k-dimensionale Supervektoren, bei denen jeweils ein Eintrag ein d-dimensionaler Untervektor ist. Für $k=3, D=6$ und $d=2$ würde beispielsweise der Vektor (-12; 31; 12; 18; 23; -31) als ((-12;31); (12;18); (23; -31)) aufgefasst.

Für den d-dimensionalen Vektorraum der Untervektoren aller Gaußdichten $N_j$ aller Zustände $s_i$ wird ein gemeinsames Codebuch erstellt.

Beispiel für ein Codebuch mit $C = 4$ Einträgen bei $d = 2$:

    0: (-12; 30)
    1: (18; 0)
    2: (24; -31 )
    3: (12; 19)

Der obige Differenzvektoren (-12; 31; 12; 18; 23; -31) würde dann durch die Codebuchindizes (0; 3; 2) repräsentiert. Wird der Speicherbedarf für das Codebuch vernachlässigt, genügen $\log_2(C) \times k$ Bits zum Speichern eines Differenzvektors mit Gaussian Streaming.

Bei der Resourcengenerierung wird von einem fertig trainierten Spracherkennungssystem ausgegangen. Trainingsalgorithmen für Hidden-Markov-Modelle mit Mischungsverteilungen aus Gaußdichten sind allgemein bekannt. Ein weit verbreitetes Trainingsverfahren ist beispielsweise der Baum-Welch-Trainingsalgorithmus. Ausgehend von den Mittelwertvektoren der fertig trainierten Gaußdichten wird in den folgenden Schritten ein Codebuch erzeugt:

1. Zusammenfassung der D-dimensionalen Mittelwertvektoren aller Gaußdichten in Cluster:

   Die Mittelwertvektoren werden durch ein Clustering-Verfahren in Cluster partitioniert. Zur Partitionierung von Vektoren gibt es verschiedene Algorithmen. Ein mögliches, weit verbreitetes Verfahren ist das folgende:

   1.1 Wähle eine Anzahl von Clustern M, z.B. M=256 und Iterationen I, z.B. I=100
   1.2 Initialisierung der Zentroidenvektoren z:

   Wähle zufällig M Mittelwertvektoren $m_n$ mit $n=1,...,M$ aus und setze $z_n=m_n$

   1.3 Partitionierung: Für alle Mittelwertvektoren $m_j$: Ordne den Mittelwertvektor $m_j$ dem Cluster n zu, dessen Zentroidenvektor $z_n$ den kleinsten Euklidischen Abstand zu $m_j$ hat
   1.4 Neuberechnung der Zentroidenvektoren: Für alle Cluster n berechne $z_n$ als Durchschnitt aller Mittelwertvektoren in dem Cluster n 1.5 Gehe zu 1.3 falls I > 0, sonst I=I-1

2. Berechnung der Differenzvektoren für jeden Mittelwertvektor $m_j$:

   Der Differenzvektor $a_j$ für jeden Mittelwertvektor $m_j$ ergibt sich als Differenz $a_j = (m_j - z_n)$ zwischen Mittelwertvektor m und dem zugehörigen Zentroidvektor $z_n$ des Clusters n, dem der Mittelwertvektor zugeordnet ist.

3. Erstellung eines Codebuchs für die Differenzvektoren:

   Um das Codebuch zu erstellen, gibt man beispielsweise eine Anzahl C der Codebucheinträge und eine Dimension d der Unterräume, d.h. der Streams, vor. Die Anzahl der Streams k ergibt sich dann aus $k=D/d$. Die D-dimensionalen Differenzvektoren werden in d-dimensionale Untervektoren u unterteilt, jeder Differenzvektor ergibt k Untervektoren. Die Menge aller Untervektoren u bildet die Ausgangsbasis für die Erstellung des Codebuchs. Das Codebuch mit C Einträgen für die d-dimensionalen Untervektoren u wird durch Vektorquantisierung erstellt. Algorithmen zur Vektorquantisierung sind allgemein bekannt, ein weit verbreitetes Verfahren ist beispielsweise der Linde-Buzo-Gray (LBG)-Algorithmus. Das Ergebnis der Vektorquantisierung sind C d-dimensionale Codebucheinträge c(j), j=1...C

In bevorzugten Ausführungsformen umfasst die Emissionsberechnung die Berechnung der logarithmierten Emissionswahrscheinlichkeiten der Gaußdichten der Hidden-Markov-Modelle für einen beobachteten Merkmalvektor. Das vorgeschlagene Verfahren kann auch benutzt werden, um die Emissionsberechnung zu beschleunigen. Für die Emissionsberechnung, insbesondere für die Berechnung von log p(o_t| j), muss der quadratische euklidische Abstand zwischen dem Merkmalvektor o_t und dem Mittelwertvektor m_j berechnet werden:

$$(m\_j - o\_t) * (m\_j - o\_t).$$

Da der Mittelwertvektor aus der Summe von Zentroid z_n und Differenzvektor a_j berechnet werden kann, gilt m_j = z_n + a_j und

$$(m\_j - o\_t) * (m\_j - o\_t) =$$
$$(z\_n + a\_j - o\_t) * (z\_n + a\_j - o\_t) =$$
$$= (a\_j * a\_j) + 2(a\_j * z\_n) - 2(a\_j * o\_t) + (z\_n - o\_t)*(z\_n - o\_t)$$

Die ersten beiden Summanden (a_j * a_j) und 2(a_j * z_n) sind unabhängig vom beobachteten Vektor o_t und können für alle Mittelwertvektoren vorberechnet werden.

Der Term (z_n - o_t)*(z_n - o_t) ist der Abstand des Zentroiden z_n zum beobachteten Merkmalsvektor o_t. Dieser Wert muss nur einmal pro Zentroid z_n berechnet werden, wobei die Zahl der Zentroide typischerweise deutlich kleiner ist als die Zahl der Mittelwertvektoren.

Der letzte zu berechnende Term ist 2(a_j* o_t). Da a_j und o_t als Supervektoren betrachtet werden können, kann man zur Berechnung der Emissionswahrscheinlichkeit das D-dimensionale Skalarprodukt von a_j und o_t in k Skalarprodukte der d-dimensionalen Untervektoren a_j(i) und o_t(i) mit i=1...k umformen:

$$2(a\_j * o\_t) = Summe\_i=1...k \ [ 2(a\_j(i) * o\_t(i)) ]$$

Wird a_j im Codebuch als quantisierter Differenzvektor a_j durch die Einträge c(q_1),...,c(q_k) mit den Indizes q_1... q_k repräsentiert, kann man mit einer vorberechneten Tabelle T(i,j) = 2(c(j) *o_t(i)) für alle Codebucheinträge c(j) den Term effizient nähern.

Bei der Emissionsberechnung wird in folgenden Schritten vorgegangen:

1. Vorberechnung der Summanden (a'_j * a'_j) und 2(a'_j * z_n) für alle M ittelwertsvektoren

2. Gegeben ein Merkmalsvektor o_t. Gesucht ist die logarithmierte Emissionswahrscheinlichkeit für die Gaußdichte N_j mit dem Mittelwertvektor m_j.

2.1 Vorberechnungen:

2.1.1 Für alle Codebuch-Einträge c(1) bis c(C) und alle k d-dimensionalen Untervektoren des beobachteten Merkmalvektors o_t = o_t(1) bis o_t(k) werden in einer zweidimensionalen Tabelle die Skalarprodukte T(i, j) = 2(o_t(i) * c(j)) gespeichert.

2.1.2 Für alle Zentroiden z_n mit n=1,...,M:

$$w\_n = (z\_n - o\_t) * (z\_n - o\_t)$$

2.2 Berechnung des Abstands des beobachteten Merkmalvektors o_t = (o_t(1); ... o_t(k)) zu einem Mittelwertsvektor m_j, dessen zugehöriger vektorquantisierte Differenzvektor a'_j durch die Codebucheinträge c(q_1), ... c(q_k) repräsentiert wird:

Nutze die vorberechneten Tabellen-Einträge zur Bestimmung von

$$(o\_t-m\_j)^* (o\_t-m\_j) =$$

$$\text{Summe\_i=1...k } [ T(i, q\_i) ] + (a'\_j * a'\_j ) + 2(a'\_j * z\_n),$$

dabei sind (a'_j * a'_j ) und 2(a'_j * z_n) bereits vorberechnet worden.

2.3 Das Ergebnis ist die gesuchte Emissionswahrscheinlichkeit.

In einer weiteren vorteilhaften Variante des erfindungsgemäßen Verfahrens werden nicht alle Gaußdichten N_j ausgewertet, sondern lediglich eine Auswahl. Dadurch kann die Emissionsberechnung beschleunigt werden. Das wird erreicht, indem das erfindungsgemäße Verfahren mit einem Gaussian Selection Verfahren kombiniert wird. Gaussian Selection Verfahren basieren auf der Tatsache, dass die logarithmierten Emissionswahrscheinlichkeiten log p(o_t j) vieler Gaußdichten N_j so klein sind, dass sie bei der Berechnung ignoriert werden können, ohne dass die Erkennungsgenauigkeit des Spracherkennungssystems wesentlich verringert wird. Die Kombination des erfindungsgemäßen Verfahrens mit Gaussian Selection hat den Vorteil, dass eine weitere Beschleunigung der Berechnung ohne zusätzlichen Rechenaufwand erreicht wird, da die für das erfindungsgemäße Verfahren berechneten Zentroiden auch für Gaussian Selection genutzt werden. Es gibt unterschiedliche Verfahren zur Gaussian Selection. Eine gebräuchliche Variante von Gaussian Selection, die auf Gaussian Clustering basiert, ist in Gehrig, D. und Schaaf, Th.: "A Comparative Study of Gaussian Selection Methods in Large Vocabulary Continuous Speech Recognition.",Proceedings of Interspeech 2006, 2006, Seiten 625-628 beschrieben.

Kombiniert man Gaussian Selection mit dem erfindungsgemäßen Verfahren, wird bei der Emissionsberechnung ein neuer Schritt 2.1.3 eingefügt und Schritt 2.2 durch eine geänderte Berechnungsweise ersetzt:

2.1.3 Bestimme die Menge Z, in der die I Zentroide z_n mit kleinstem Abstand w_n vom aktuellen Merkmalvektor o_t enthalten sind. Die Anzahl I der Zentroide in der Menge Z muss während der Resourcengenerierung so bestimmt werden, dass die Verschlechterung der Erkennungsgenauigkeit akzeptabel ist.

2.2' Berechnung des Abstands des beobachteten Merkmalvektors o_t = (o_t(1); ... o_t(k)) zu einem Mittelwertvektor m_j, dessen zugehöriger vektorquantisierte Differenzvektor a'_j durch die Codebucheinträge c(q_1 ), ... c(q_k) repräsentiert wird: Falls der dem Mittelwertvektor m_j zugeordnete Zentroid z_n nicht in der Menge Z enthalten ist, setze die Emissionswahrscheinlichkeit auf einen vordefinierten Wert. Andernfalls nutze die vorberechneten Tabellen- Einträge zur Bestimmung von

$$(o\_t-m\_j)^* (o\_t-m\_j) =$$

$$\text{Summe\_i=1...k } [ T(i, q\_i) ] + (a'\_j * a'\_j ) + 2(a'\_j * z\_n),$$

dabei sind (a'_j * a'_j) und 2(a'_j * z_n) bereits vorberechnet worden.

## Patentansprüche

1. Verfahren zur Spracherkennung einer Äußerung unter Verwendung eines Erkennungsvokabulars, bei welchem Verfahren
die Äußerung in Merkmalvektoren o_t umgewandelt wird,
die Wörter des Erkennungsvokabulars mit Zuständen s_i eines Hidden-Markov-Modells dargestellt werden, und mit einer Emissionsberechnung zumindest einem Teil der Merkmalvektoren o_t und zumindest einem Teil der Zustände s_i des Hidden-Markov-Modells eine Wahrscheinlichkeit p(o_t| s_i) zugeordnet wird, welche der Ausgabedichte des jeweiligen Zustands s_i für den jeweiligen Merkmalvektor o_t entspricht,
wobei die den Wörtern des Erkennungsvokabulars zugeordneten Zustände s_i als Mischungsverteilungen aus Gaußdichten mit D-dimensionalen Mittelwertvektoren m_j ausgebildet sind,
**dadurch gekennzeichnet, dass**
die Mittelwertvektoren m_j in Clustergruppen eingeteilt werden,
zu jeder Clustergruppe ein Clusterzentroid z_n bestimmt wird,
Differenzvektoren a_j mit D Komponenten zwischen Clusterzentroiden z_n und Mittelwertvektoren m_j berechnet werden, die D Komponenten jedes Differenzvektors a_j in k Unterräume der Dimension d=(D/k) unterteilt werden, und jeder Differenzvektor a_j durch Codebucheinträge c(j) mindestens eines Codebuches dargestellt wird, welche Codebucheinträge c(j) die gleiche Dimension wie die Unterräume haben und so ausgewählt sind, dass die Komponenten der Codebucheinträge, die den jeweiligen Differenzvektor $a_j$ darstellen, die Komponenten dieses Differenzvektors $a_j$ annähern, und
bei der Emissionsberechnung
Terme mit Komponenten der Codebucheinträge zu den Differenzvektoren $a_j$ , welche den Mittelvektoren $m_j$ der Mischungsverteilungen der jeweiligen Zustände $s_i$ zugeordnet sind, und
Terme mit Komponenten des jeweiligen Merkmalvektors $o_t$ verwendet werden.

2. Verfahren nach Anspruch 1, **dadurch gekennzeichnet, dass** bei der Emissionsberechnung vorberechnete Terme mit Komponenten der Codebucheinträge zum Differenzvektor $a_j$ und mit Komponenten der Mittelwertvektoren $m_j$ verwendet werden.

3. Verfahren nach Anspruch 1 oder 2, **dadurch gekennzeichnet, dass** bei der Emissionsberechnung clusterbezogene Terme mit Komponenten von Clusterzentroiden $z_n$ und mit Komponenten von Merkmalvektoren $o_t$, die pro Clustergruppe und Merkmalvektor $o_t$ nur einmal berechnet werden, verwendet werden.

4. Verfahren nach Anspruch 3, **dadurch gekennzeichnet, dass** ein Selektionsschritt durchgeführt wird, bei dem die Emissionsberechnung für einen Teil der Gaußdichten mit D-dimensionalen Mittelwertvektoren $m_j$ aufgrund einer erwarteten kleinen Ausgabedichte des jeweiligen Mittelwertvektors $m_j$ für den jeweiligen Merkmalvektor $o_t$ weggelassen wird.

5. Verfahren nach Anspruch 4, **dadurch gekennzeichnet, dass** beim Selektionsschritt erwartete Ausgabedichten der Mittelwertvektoren $m_j$ für den jeweiligen Merkmalvektor $o_t$ ausgehend von den bei der Emissionsberechnung pro Clustergruppe und Merkmalvektor $o_t$ nur einmal berechneten clusterbezogenen Termen mit Komponenten von Clusterzentroiden $z_n$ und mit Komponenten von Merkmalvektoren $o_t$ abgeschätzt wird.

6. Verfahren nach Anspruch 5, **dadurch gekennzeichnet, dass** die beim Abschätzen berechneten clusterbezogenen Termen für alle Mittelwertvektoren $m_j$ der Clustergruppe mit dem jeweiligen Clusterzentroid $z_n$ verwendet werden und vorzugsweise die Emissionsberechnung für die Mittelwertvektoren $m_j$ weggelassen wird, wenn sie in Clustergruppen liegen, deren Clusterzentriode $z_n$ zum Merkmaivektor $o_t$ einen Abstand aufweisen, der über einem vorgegebenen Abstandswert liegt.

7. Verfahren nach einem der Ansprüche 1 bis 6, **dadurch gekennzeichnet, dass** zum Einteilen der Mittelwertvektoren $m_j$ in Clustergruppen

a. eine Anzahl von Clustern M und eine Anzahl von Iterationen I gewählt werden,
b. bei der Initialisierung der Cluster M zufällig Mittelwertvektoren $m_n$ mit n=1,...,M als vorläufige Clusterzentroide $z_n$ ausgewählt werden und dabei für alle Cluster M jeweils $z_n=m_n$ gesetzt wird,
c. alle Mittelwertvektoren $m_j$ demjenigen Cluster n zugeordnet werden, dessen Zentroidenvektor $z_n$ den kleinsten Euklidischen Abstand zu $m_j$ hat,
d. für jeden Cluster neue Zentroidenvektoren $z_n$ als Durchschnitt aller Mittelwertvektoren im jeweiligen Cluster n berechnet werden und
e. die Schritte c bis e wiederholt werden bis die gewählte Anzahl Iterationen erreicht ist.

8. Verfahren nach Anspruch 7, **dadurch gekennzeichnet, dass** für jeden Mittelwertvektor $m_j$ ein Differenzvektor $a_j = (m_j - z_n)$ zwischen Mittelwertvektor m und dem zugehörigen Zentroidvektor $z_n$ des Clusters n bestimmt wird.

9. Verfahren nach Anspruch 8, **dadurch gekennzeichnet, dass** bei der Emissionsberechnung zwischen dem Merkmalvektor $o_t$ und dem Mittelwertvektor $m_j$ der Abstand $(m_j - o_t) * (m_j - o_t)$ über die Terme $(a_j * a_j) + 2(a_j * z_n) - 2(a_j * o_t) + (z_n - o_t)*(z_n - o_t)$ berechnet wird, wobei
die Terme $(a_j * a_j)$ und $2(a_j * z_n)$ unabhängig vom Merkmalvektor $o_t$ sind und für alle Mittelwertvektoren vorberechnet werden,
die Terme $(z_n - o_t)*(z_n - o_t)$ den Abstand des Clusterzentroids $z_n$ zum Merkmalsvektor $o_t$ darstellen und dieser Abstand nur einmal pro Cluster berechnet wird, sowie
der Term $2(a_j* o_t)$ für den jeweiligen Differenzvektor $a_j$ und den jeweiligen Merkmalvektor $m_j$ berechnet wird.

10. Verfahren nach Anspruch 9, **dadurch gekennzeichnet, dass** bei der Emissionsberechnung jeder Differenzvektor $a_j$ als quantisierter Differenzvektor $a'_j$ mit den Codebucheinträgen $c(q_1),...,c(q_k)$ eingesetzt wird.

**11.** Verfahren nach Anspruch 10, **dadurch gekennzeichnet, dass** bei der Emissionsberechnung Skalarprodukte der Codebuch-Einträge c(1) bis c(C) und der k D-dimensionalen Untervektoren des beobachteten Merkmalvektors o_t = o_t(1) bis o_t(k) in einer zweidimensionalen Tabelle T(i,j) = 2(o_t(i) * c(j)) bereitgestellt werden.

**12.** Spracherkennungsvorrichtung zum Erkennen einer Äußerung unter Verwendung eines Erkennungsvokabulars, welche Spracherkennungsvorrichtung derart ausgestaltet ist, dass sie ein Verfahren gemäß einem der Ansprüche 1 bis 11 durchführbar macht.

**13.** Computerprogrammprodukt, welches die Durchführung eines Verfahrens nach einem der Ansprüche 1 bis 7 auf einer programmgesteuerten Spracherkennungsvorrichtung veranlasst.

**Claims**

**1.** A method for speech recognition of an utterance using a recognition vocabulary, in which method
the utterance is transformed into feature vectors o_t,
the words of the recognition vocabulary are represented by states s_i of a hidden Markov model, and
a probability p(o_t| s_i) is assigned to at least part of the feature vectors o_t and at least to part of the states s_i of the hidden Markov model by an emission calculation, which probability p(o_t| s_i) corresponds to the output density of the respective state s_i for the respective feature vector o_t,
wherein the states s_i associated to the words of the recognition vocabulary are formed as mixture distributions of Gaussian densities with D dimensional mean vectors m_j
**characterised in that**
the mean vectors m_j are classified in cluster groups
a cluster centroid z_n is determined to each cluster group,
differential vectors a_j are calculated with D components between cluster centroids z_n and mean vectors m_j, the D components of each differential vector a_j are subdivided into k sub-spaces of the dimension d=(D/k), and each differential vector a_j is represented by code book entries c(j) of at least one code book, said code book entries c(j) having the same dimension as the sub-spaces and being chosen in such a manner that the components of the code book entries, which represent the respective differential vector a_j, approximate the components of this differential vector a_j, and
that for calculating the emissions
terms with components of the code book entries to the differential vector a_j, assigned to the mean vectors m_j of the mixture distributions of the respective states s_i, and
terms with components of the respective feature vector o_t are used.

**2.** Method according to claim 1, **characterised in that** pre-calculated terms with components of the code book entries to the differential vector a_j and with components of the mean vectors m_j are used for calculating the emissions.

**3.** Method according to claim 1 or 2, **characterised in that** cluster related terms with components of cluster centroids z_n and with components of feature vectors o_t are used for calculating the emissions, where the cluster related terms are calculated only once per cluster group and feature vector o_t.

**4.** Method according to claim 3, **characterised in that** a selection step is carried out, wherein the emission calculation is omitted for part of the Gaussian densities with D dimensional mean vectors m_j, due to an expected small output density of the respective mean vector m_j for the respective feature vector o_t.

**5.** Method according to claim 4, **characterised in that** expected output densities of the mean vectors m_j for the respective feature vector o_t are estimated in the selection step, based on the cluster related terms with components of cluster centroids z_n and with components of feature vectors o_t, which are calculated only once per cluster group and feature vector o_t.

**6.** Method according to claim 5, **characterised in that** the cluster related terms, calculated with estimating, are used for all mean vectors m_j of the cluster group with the respective cluster centroid z_n, and that preferably, the emission calculation for the mean vectors m_j is omitted, if they are situated in cluster groups whose cluster centroids z_n have a distance to the feature vector o_t above a predetermined distance value.

**7.** Method according to any of claims 1 to 6, **characterised in that** for classifying the mean vectors m_j in cluster groups

a. a number of clusters M and a number of iterations I are chosen,

b. at initialising the cluster M, mean vectors m_n, with n=1, ...,M are chosen at random as provisional cluster centroids z_n, wherein z_n=m_n is set for all clusters M respectively,

c. all mean vectors m_j are associated to that cluster n, whose centroid vector z_n has the smallest Euclidean distance to m_j,

d. new centroid vectors z_n are calculated for each cluster as an average value of all mean vectors in the respective cluster n

e. steps c to e are repeated, until the chosen number of iterations has been attained.

8. Method according to claim 7, **characterised in that** for each mean vector m_j, a differential vector a_j = (m_j - z_n) is determined between the mean vector m and the associated centroid vector z_n of the cluster n.

9. Method according to claim 8, **characterised in that** with the emission calculation between the feature vector o_t and the mean vector m_j, the distance (m_j - o_t) * (m_j - o_t) is calculated using the terms

(a_j * a_j) + 2(a_j * z_n) - 2(aJ * o_t) + (z_n - o_t) * (z_n - o_t), wherein

the terms (a_j * a_j) + 2(a_j * z_n) are independent from feature vector o_t and are precalculated for all mean vectors,

the terms (z_n - o_t) * (z_n - o_t) represent the distance of the cluster centroid z_n to the feature vector o_t, this distance being calculated only once per cluster, as well as

the term 2(a_j * o_t) is calculated for the respective differential vector a_j and the respective feature vector m_j.

10. Method according to claim 9, **characterised in that** with the emission calculation, each differential vector a_j is utilised as a quantised differential vector a'_j with the code book entries c(q_1),..., c(q_k).

11. Method according to claim 10, **characterised in that** with the emission calculation, scalar products of the code book entries c(1) to c(C) and of the k D dimensional sub-vectors of the observed feature vector o_t = o_t(1) to o_t(k) are provided in a two-dimensional table T(l,j) = 2(o_t(i) * c(j)).

12. Device for speech recognition for recognising an utterance, using a recognition vocabulary, said device for speech recognition being designed in a way that it renders executable a method according to any of claims 1 to 11.

13. Computer program product, which causes carrying out the method according to any of claims 1 to 7 on a program controlled speech recognition device.

## Revendications

1. Procédé de reconnaissance vocale d'un énoncé en utilisant un vocabulaire de reconnaissance, dans lequel procédé l'énoncé est transformé en vecteurs de caractéristique o_t,

les mots du vocabulaire de reconnaissance sont représentés par des états s_i d'un modèle de Markov caché, et qu'une probabilité p(o_t| s_i) est associée par un calcule d'émission au moins a une partie des vecteurs de caractéristique o_t et au moins une partie des états s_i du modèle de Markov caché, qui correspond à la densité de sortie de l'état s_i respectif pour le vecteur de caractéristique o_t respectif,

dans lequel les états s_i associés aux mots du vocabulaire de reconnaissance sont formés comme des distributions de mélange de densités gaussienne avec des vecteurs de valeurs moyenne D dimensionnels m_j,

**caractérisé en ce, que**

les vecteurs de valeurs moyenne m_j sont classifiés en groupes de cluster,

un centroïde de cluster z_n est défini à chaque groupe de cluster,

des vecteurs différentiels a_j sont calculés avec des composants D entre les centroïdes de cluster z_n et les vecteurs de valeurs moyennes m_j, les composants D de chaque vecteur différentiel a_j sont subdivisés en k sub-espaces de la dimension d=(D/k), et chaque vecteur différentiel a_j est représenté par des entrées c(j) au moins d'un livre-code, lesdites entrées c(j) ayant la même dimension comme les sub-espaces et étant choisies de manière, que les composants des entrées du livre-code, qui représentent le vecteur différentiel a_j respectif, approximent les composants de ce vecteur différentiel a_j, et

que lors du calcul d'émission

les termes comprenant des composants des entrées du livre-code aux vecteurs différentiels a_j, qui sont associés aux vecteurs de valeurs moyennes m_j, des distributions de mélange des états respectifs s_i, et

les termes comprenant des composants du vecteur respectif de caractéristique o_t, sont utilisés.

**2.** Procédé selon la revendication 1, **caractérisé en ce, que** des termes précalculés comprenant des entrées de livre-code au vecteur différentiel $a_j$ et des composants des vecteurs de valeurs moyennes $m_j$ sont utilisés lors du calcul d'émission.

**3.** Procédé selon la revendication 1 ou 2, **caractérisé en ce, que** des termes se référant aux clusters comprenant des composants de centroïdes de cluster $z_n$ et des composants de vecteur de caractéristique $o_t$ sont utilisés, qui sont calculés seulement une fois par groupe de cluster et par vecteur de caractéristique $o_t$.

**4.** Procédé selon la revendication 3, **caractérisé en ce, qu'**une étape de sélection est effectuée, dans laquelle on omit le calcul d'émissions pour une partie des densités gaussiennes comprenant des vecteurs de valeurs moyenne D dimensionnels $m_j$ à cause d'une densité de sortie petite prévue du vecteur de valeurs moyennes $m_j$ respectif pour le vecteur respectif de caractéristique $o_t$.

**5.** Procédé selon la revendication 4, **caractérisé en ce, que** les densités de sortie prévues des vecteurs de valeurs moyennes $m_j$ pour le vecteur respectif de caractéristique $o_t$ sont estimées à partir des termes calculés seulement une fois lors du calcul d'émissions, qui se réfèrent aux clusters comprenant des composants de centroïdes de cluster $z_n$ et des composants de vecteur de caractéristique $o_t$.

**6.** Procédé selon la revendication 5, **caractérisé en ce, que** les termes se référant aux clusters, calculés lors de l'estimation, sont utilisés pour tous les vecteurs de valeurs moyennes $m_j$ du groupe de clusters avec le centroïde respectif de cluster $z_n$, et que de préférence le calcul d'émissions pour les vecteurs de valeurs moyennes $m_j$ est omis, si ils sont situés dans des groupes de cluster, dont les centroides de cluster $z_n$ ont une distance au vecteur de caractéristique $o_t$, qui est au dessus un valeur de distance prédonné.

**7.** Procédé selon une quelconque des revendications 1 à 6, **caractérisé en ce, que** pour classifier les vecteurs de valeurs moyennes $m_j$ en groupes de cluster

    a. un nombre de clusters M et un nombre d'itérations I sont choisis,
    b. que lors de l'initialisation des clusters M, on choisit incidemment des vecteurs de valeurs moyennes $m_n$, avec n=1,..., M comme des centroïdes provisionnels de cluster $z_n$, $z_n=m_n$ étant introduit pour chacun de tous les clusters M,
    c. que l'on associe tous les vecteurs de valeurs moyennes $m_j$ à ce cluster n, dont le vecteur de centroïdes $z_n$ à la distance euclidienne la plus petite à $m_j$,
    d. pour chaque cluster des vecteurs de centroïdes $z_n$ neufs sont calculés comme la moyenne de tous les vecteurs de valeurs moyennes $m_j$ dans le cluster n respectif, et
    e. les étapes c à e se sont répétées, jusqu'à ce que le nombre sélectionné d'itérations a été atteint.

**8.** Procédé selon la revendication 7, **caractérisé en ce, que** pour chaque vecteur de valeurs moyennes $m_j$, un vecteur différentiel $a_j = (m_j - z_n)$ entre le vecteur de valeur moyen m et le vecteur de centroïde $z_n$ associé au cluster n est déterminé.

**9.** Procédé selon la revendication 8, **caractérisé en ce, que** lors du calcul d'émissions entre le vecteur de caractéristique $o_t$ et le vecteur de valeurs moyennes $m_j$, la distance $(m_j - o_t) * (m_j - o_t)$ est calculé via les termes $(a_j * a_j) + 2(a_j * z_n) - 2(a_j * o_t) + (z_n - o_t)*(z_n - o_t)$, dans lequel

les termes $(a_j * a_j)$ et $2(a_j * z_n)$ sont indépendants du vecteur de caractéristique $o_t$, et tous les vecteurs de valeurs moyennes sont précalculés,
les termes $(z_n - o_t)*(z_n - o_t)$ représentent la distance du centroïde de cluster $z_n$, et ce distance est calculée seulement une fois par cluster, et
le terme $2(a_j * o_t)$ est calculé pour le vecteur différentiel $a_j$ et le vecteur respectif de valeurs moyennes $m_j$.

**10.** Procédé selon la revendication 9, **caractérisé en ce, que** lors du calcul d'émissions, chaque vecteur différentiel $a_j$ est introduit comme un vecteur différentiel quantifié $a'_j$ avec les entrées du livre-code $c(q_1),...,c(q_k)$

**11.** Procédé selon la revendication 10, **caractérisé en ce, que** lors du calcul d'émissions, des produits scalaires des entrées de livre-code $c(1)$ à $c(C)$ et des sous vecteurs kD dimensionnels du vecteur observé de caractéristique $o_t = o_t(1)$ à $o_t(k)$ sont préparés dans un tableau deux dimensionnel $T(i,j) = 2(o_t(i) * c(j))$.

**12.** Dispositif de reconnaissance vocale pour reconnaître un énoncé en utilisant d'un vocabulaire de reconnaissance, ledit dispositif de reconnaissance vocale étant arrangé de manière, qu'il rend exécutable un procédé selon une quelconque des revendications 1 à 11.

13. Produit de programme d'ordinateur, qui fait faire exécuter d'un procédé selon une quelconque des revendications 1 à 7 à un dispositif de reconnaissance vocale commandé par un programme.

Aufnahme

A/D

Sprachsignal
einer Äußerung

Merkmalsextraktion

Merkmalvektoren

$o\_1, o\_2, ..., o\_T$

aktueller
Merkmalvektor

$o\_t$

Codebuch,
Zentroide

Vorberechnung

Emissionsberechnung

Vorberechnete
$(a'\_J*a'\_J)$;
$2(a'\_J*z\_n)$

Tabelle mit
vorberechneten
Ergebnissen für $o\_t$

$T(i,j) ; w\_n$

Abstandsberechnung

Fig. 1

Suche

Wortfolge

EP 2 431 969 B1

# EP 2 431 969 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7295978 B1
- EP 1457967 A2

**In der Beschreibung aufgeführte Nicht-Patentliteratur**

- **BOCCHIERI, E. ; MAK, B. K-W.** Subspace Distribution Clustering Hidden Markov Model. *IEEE Trans. Speech and Audio Processing,* 2001, vol. 9 (3), 264-275
- **ASTROV, S.** Memory Space Reduction for Hidden Markov Models in Low-Resource Speech Recognition Systems. *Proceedings of the International Conference on Spoken Language Processing,* 2002, 1585-1588
- **GEHRIG, D. ; SCHAAF, TH.** A Comparative Study of Gaussian Selection Methods in Large Vocabulary Continuous Speech Recognition. *Proceedings of Interspeech,* 2006, vol. 2006, 625-628